Europäisches Patentamt

European Patent Office

Office européen des brevets

(19)

(11) **EP 0 430 615 B1**

(12) **EUROPEAN PATENT SPECIFICATION**

(45) Date of publication and mention
of the grant of the patent:
**10.04.1996 Bulletin 1996/15**

(51) Int Cl.6: **G10L 3/00**, G10L 5/06

(21) Application number: 90312821.3

(22) Date of filing: **26.11.1990**

(54) **Speech recognition system**

System zur Spracherkennung

Système pour la reconnaissance de la parole

(84) Designated Contracting States:
**DE FR GB**

(30) Priority: **28.11.1989 JP 306477/89**

(43) Date of publication of application:
**05.06.1991 Bulletin 1991/23**

(73) Proprietor: **KABUSHIKI KAISHA TOSHIBA**
**Kawasaki-shi, Kanagawa-ken 210, Tokyo (JP)**

(72) Inventors:
• **Takebayashi, Yoichi,**
**c/o Intellectual Property Div**
**Minato-ku, Tokyo 105 (JP)**
• **Tsuboi, Hiroyuki, c/o Intellectual Property Div.**
**Minato-ku, Tokyo 105 (JP)**
• **Kanazawa, Hiroshi,**
**c/o Intellectual Property Div.**
**Minato-ku, Tokyo 105 (JP)**

(74) Representative: **Freed, Arthur Woolf et al**
**MARKS & CLERK,**
**57-60 Lincoln's Inn Fields**
**London WC2A 3LS (GB)**

(56) References cited:
**EP-A- 0 237 934          GB-A- 2 230 370**

• **INTERNATIONAL CONFERENCE ON ACOUSTICS SPEECH ANDSIGNAL PROCESSING vol. 1, 1 April 1986, TOKYO JAPAN pages 749 - 751; B.P. LANDELL R. WOHLFORD L. BAHLER: 'Improved speech recognition in noise'**
• **COMPUTER SPEECH AND LANGUAGE vol.2, 1987, LONDON GB pages 321-341; J.WILPON L. RABINER: "Application of hidden Markov models to automatic speech endpoint detection"**
• **IEEE TRANSACTIONS ON ACOUSTICS,SPEECH AND SIGNALPROCESSING. vol. 29, no. 4, 1 August 1981, NEW YORK US pages 777 - 785; L. LAMEL L. RABINER A. ROSENBERG J. WILPON: 'An improved end point detector for isolated word recognition'**
• **IEEE TRANSACTIONS ON ACOUSTICS,SPEECH AND SIGNALPROCESSING. vol. 31, no. 5, 1 October 1983, NEW YORK US pages 1061 - 1066; T. KANEKO N. REX DIXON: 'A hierarchical decision approach to large vocabulary discrete utterance recognition'**
• **INTERNATIONAL CONFERENCE ON ACOUSTICS SPEECH ANDSIGNAL PROCESSING vol. 4, 26 March 1985, TAMPA FORIDA pages 1565 - 1568; J.P. HATON: 'A frame language for the control of phonetic decoding in continuous speech recognition'**

## Description

The present invention relates to a speech recognition system for recognizing, with high accuracy, an input speech containing various noises or an input speech containing spoken words preceded or followed by a semantically insignificant utterance.

Hitherto, a speech, or more precisely, speech segments, i.e., words or phrases forming a speech, are recognized based on the boundaries among the speech segments, which have been detected from rather simple parameters such as changes in tone energy, tone pitch, time-series data of tone frequency, and zero-crossing rate.

More specifically, first a speech pattern (i.e., a speech feature vector) of each speech segment is extracted by detecting the boundaries of the segment, and then, the speech pattern thus extracted is correlated with the various reference patterns stored in a speech recognition dictionary. The input speech segment is found to be identical to the most similar reference pattern. As a result of this, the input speech is recognized.

It is by detecting the boundaries of a speech segment that the speech pattern (i.e., a speech feature vector) of the segment is extracted. This method is used since it helps to reduce the amount of data that should be processed to achieve the correlation of the pattern of the speech segment with the various reference patterns. Were the speech segment not so extracted, it would contain redundant data which contributes nothing to speech recognition, which must also be processed to achieve the speech-pattern correlation.

Various speech recognition methods are known, in which the segments of the input speech are detected, and the patterns of the speech segments, thus detected, are correlated with the reference patterns stored in a speech recognition dictionary. Of these known methods, the DP matching method, the HMM (Hidden Markov Method), and the multiple similarity method are commonly used in the art.

One example is disclosed in "A hierarchical Decision approach to large vocabulary discrete utterance recognition", T. Kanebo et N. Rex Dixon, IEEE Trans. on ASSP, vol ASSP-31, no5, October 1983, in which a set of thresholds is used to estimate starting and ending points of words, and the segments are then compared with reference patterns.

As has been described, the boundaries among the speech segments forming an input speech are detected from simple parameters such as changes in tone energy and the like. The parameters are so simple that the boundaries of the speech segments cannot be accurately detected if the input speech has been made in noisy environments or contains semantically insignificant utterances such as "ah" and "eh". Hence, an increase in the accuracy of detecting segment boundaries is a key to the practical use of the speech recognition system.

The so-called "word spotting" method may be used to recognize a speech made in a noisy environment, both robustly and accurately. The word spotting method is characterized in that each segment boundary is taken as flexible, not fixed as in the conventional segment-extraction. One example of this is given in "An improved endpoint detector for isolated word recognition", L. Lamel et al., IEEE Trans. on ASSP, Vol ASSP-29, no4, August 1981. Firstly, the input speech is matched against a vocabulary, on the basis of a small set of selected features, to identify "best-match" words. The second and longer stage involves matching a limited number of words, using a more detailed set of features. The first stage provides the limited number of word candidates for the second stage.

The word spotting method, however, is disadvantageous in the following respects.

In the word spotting method, the input speech is cut, at arbitrary points, into a plurality of segments. The speech pattern of each segment, thus obtained, is correlated with the reference patterns stored in a speech recognition dictionary. Hence, the speech-pattern correlation must be repeated more times to recognize the input speech than in the conventional method wherein the feature vector of each speech segment is extracted and correlated with the reference patterns stored in the speech recognition dictionary. Consequently, the word spotting method requires much more time than in the conventional method.

Were a system to be developed which performed the word spotting method in real time, its hardware would be gigantic and its manufacturing cost would inevitably be extremely high. Therefore, when the word spotting method is applied, use is made of speech feature parameters of lower order, or the input speech is sampled at a lower frequency, thereby to lower the order of each speech feature vector used in pattern correlation.

When the order of the speech feature vector is lowered, the subtle features of the input speech cannot be recognized, though the general feature of the speech (e.g., the word feature vector) can be recognized correctly. As a consequence, no sufficiently accurate correlation of speech segments can be accomplished, inevitably increasing the possibility of erroneous speech recognition.

By contrast, in the method wherein the boundaries of the segments forming an input speech are first detected, thus distinguishing one word from another, and the speech pattern of each segment is then correlated with the reference patterns, it suffices to process a relatively small amount of data to achieve the pattern correlation. Therefore, the order of the speech feature vector can be increased enough to accomplish a high-accuracy pattern correlation. This method has a fatal drawback, however. If an error is made in detecting word boundaries, the speech feature vector of each segment will have a wrong value. Hence, this method can hardly be employed in very noisy environments.

As has been pointed out, it is difficult with the conventional speech recognition system to extract, from an input speech, speech feature vectors of the speech segments which are accurate enough to correlate the segment patterns with reference patterns correctly, if the input speech is one produced in a noisy environment. The word spotting method, in which the boundaries of the segments of the input speech are flexible, can be employed in the conventional system in an attempt to recognize the input speech. In this case, a pattern correlation method suitable for continuous speech patterns, such as the multiple similarity method, must be applied. To perform such a pattern correlation method successfully, a great amount of data must be processed. Inevitably, the order of the feature vectors of the input speech segments must be lowered since the hardware of the system is limited for economy reasons. Consequently, it remains very difficult to increase the recognition rate of the conventional speech recognition system.

Accordingly, it is the object of the present invention to provide a speech recognition system which can accurately recognize an input speech even if the input speech has been made in noisy environments or contains semantically insignificant utterances such as "ah" and "eh," in particular, by rejecting the semantically insignificant utterances.

According to the invention, there is provided a speech recognition system as defined in Claim 1, and a method as defined in Claim 8 of recognizing input speech.

The preferred system is characterized in the following respects. First, the input speech is subjected to continuous pattern matching by word spotting, in accordance with the time-series data of low-order feature vectors, thereby obtaining first speech recognition results showing the general feature of the input speech. Secondly, the high-order second feature vectors representing the subtle feature of the input speech are processed in accordance with segment boundaries detected from the results of the continuous pattern matching, thereby obtaining second speech recognition results showing the subtle feature of the input speech. Thirdly, the first recognition results and the second recognition results are processed, thereby recognizing the input speech with high accuracy.

As has been described, the low-order first feature vectors showing the general feature of the input speech is used in the word spotting, without detecting the segments of the input speech. Hence, the amount of data that must be processed to achieve the word spotting is successfully reduced. Further, the high-order second feature vectors representing the subtle feature of the input speech are extracted after the detection of the segments (i.e., segment boundaries) of the speech, and then the segment pattern matching is carried out.

Since the first recognition results and the second recognition results are processed together, thereby obtaining the final recognition results, the amount of data processed to provide the final recognition results is relatively small. Further, not influenced by the accuracy of the segment boundaries detected, the system can recognize the input speech at high speed and with high accuracy, even if the input speech is one made in a noisy environment. In other words, the system can recognize an input speech with high accuracy, even if the speech is distorted by noise and/or semantically insignificant utterances. The speech recognition system of the invention can, therefore, is both reliable and practical.

In summary, the system of the invention can recognize an input speech with remarkably high accuracy since the recognition is performed by processing the results of continuous pattern matching carried out on the basis of data showing the general feature of the input speech and also by processing the results of segment pattern matching effected on the basis of high-order feature parameters showing the subtle feature of the input speech. Moreover, low-order feature vectors are used in the continuous pattern matching which involves processing of much data, whereas high-order feature vectors are used in the segment pattern matching which involves processing of less data, the system needs only to process a relatively small amount of data to accomplish an efficient and reliable speech recognition.

This invention can be more fully understood from the following detailed description of preferred embodiments with reference to the accompanying drawings, in which:

Fig. 1 is a block diagram illustrating a speech recognition system according to the present invention;
Fig. 2 is a block diagram showing the speech input unit and speech analysis unit incorporated in the system shown in Fig. 1;
Fig. 3 is a diagram explaining how the first and second feature parameters of input speech are extracted in the speech analysis unit;
Figs. 4 and 5 are diagrams explaining how continuous pattern matching is performed to achieve a word spotting method;
Fig. 6 is a flow chart explaining how the system shown in Fig. 1 carries out speech recognition;
Figs. 7A and 7B are diagrams illustrating the input speech patterns, and explaining how the system shown in Fig. 1 recognizes the input speech;
Fig. 8 is a diagram schematically showing another speech recognition process which the system shown in Fig. 1 can perform;
Fig. 9 is a diagram explaining how the reference patterns stored in a dictionary are updated, thus achieving a speech pattern learning process;
Fig. 10 is a flow chart explaining the word-learning process the system of Fig. 1 performs; and
Fig. 11 is a schematic representation of a speech-feature vector extracted from an input speech pattern and used for word-learning purpose.

**EP 0 430 615 B1**

An embodiment of the present invention will now be described, with reference to the accompanying drawings.

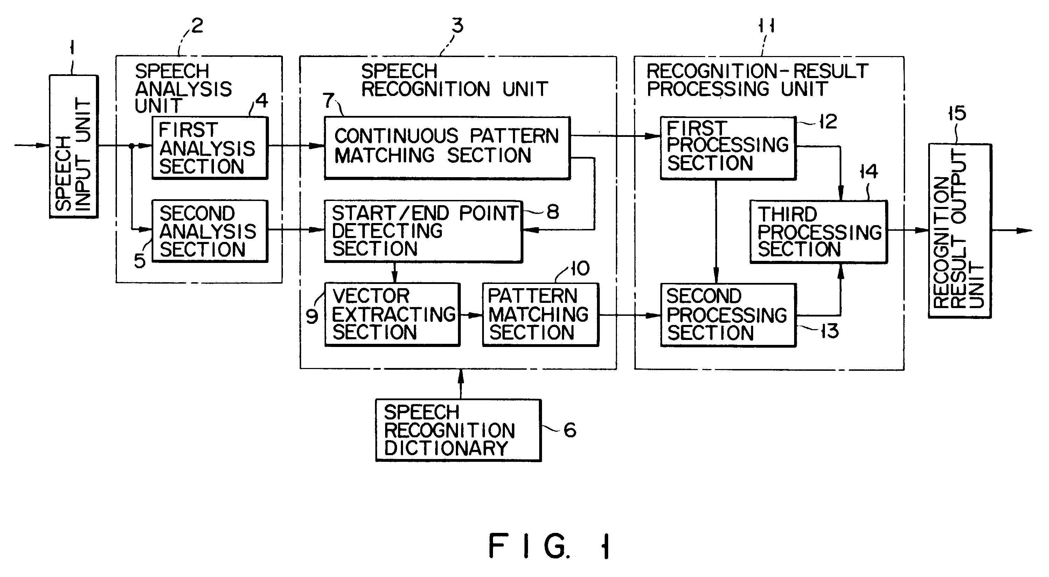

Fig. 1 schematically illustrates a speech recognition system according to the present invention. The system comprises a speech input unit 1, a speech analysis unit 2, a speech recognition unit 3, a speech recognition dictionary 6, a recognition-result processing unit 11, and a recognition result output unit 15.

The speech input unit 1 receives a speech signal supplied from a microphone (not shown) and converts this signal into a digital signal. The digital signal is supplied to the speech analysis unit 2.

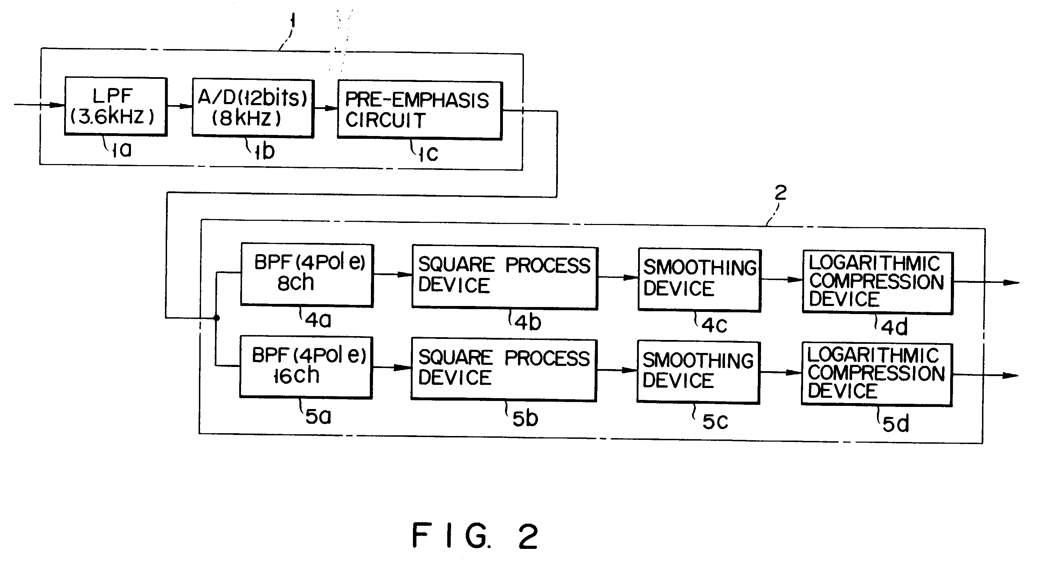

As is shown in Fig. 2, the speech input unit 1 comprises a low-pass filter (LPF) 1a, an A/D converter 1b, and a pre-emphasis circuit 1c. The low-pass filter la removes high-frequency noise components having frequency of 3.6KHz or more from the input speech signal. The A/D converter 1b samples the analog speech signal at a sampling frequency of 8KHz and a quantization bit number of 12, thereby converting the speech signal output by the low-pass filter 1a into a digital speech signal. The pre-emphasis circuit 1c applies a humming window of, for example, 24 msec to the digital speech signal, thereby emphasizing the digital speech signal.

The A/D converter 1b can be designed to sample the analog speech signal at a sampling frequency of 12KHz and a quantization bit number of 16. In other words, the specification of the A/D converter 1b is determined in accordance with the recognition accuracy and the like which are required for recognizing the input speech.

The speech analysis unit 2 is designed to analyze the emphasized digital speech signal output by the speech input unit 1. More specifically, it performs various analyses, such as FTT analysis, LCP analysis, spectral analysis, and filter analysis, thereby obtaining a feature parameter every 8 msec from the digital speech signal. the feature parameters thus obtained form time-series data, which is supplied from the speech analysis unit 2 to the speech recognition unit 3. The unit 3 processes the time-series data, as will be described later.

As is shown in Fig. 1, the speech analysis unit 2 comprises a first analysis section 4 and a second analysis section 5. The section 4 extracts a first speech feature parameter of a low order (i.e., a feature parameter having a low frequency-resolution) from the digital speech signal output by the speech input unit 1. The section 5 extracts a second speech feature parameter of a high order (i.e., a feature parameter having a high frequency-resolution) from the digital speech signal. The first feature parameter is input to the speech recognition unit 3 and used therein to collate a continuous speech pattern having flexible segment boundaries. The second feature parameter is supplied to the unit 3 and used therein to collate short segment patterns each having fixed boundaries.

More precisely, as is illustrated in Fig. 2, the first analysis section 4 comprises an 8-channel band-pass filter (BPF) 4a, a square process device 4b, a smoothing device 4c, and a logarithmic compression device 4d. The output signal of the 8-channel band-pass filter 4a is square-processed by the device 4b, smoothed by the device 4c, and logarithmically compressed by the device 4d, and is converted into a first feature parameter. Similarly, the analysis section 5 comprises a 16-channel band-pass filter (BPF) 5a, a square process device 5b, a smoothing device 5c, and a logarithmic compression device 5d. The output signal of the 16-channel band-pass filter 5a is square-processed by the device 5b, smoothed by the device 5c, and logarithmically compressed by the device 5d, and is converted into a second feature parameter.

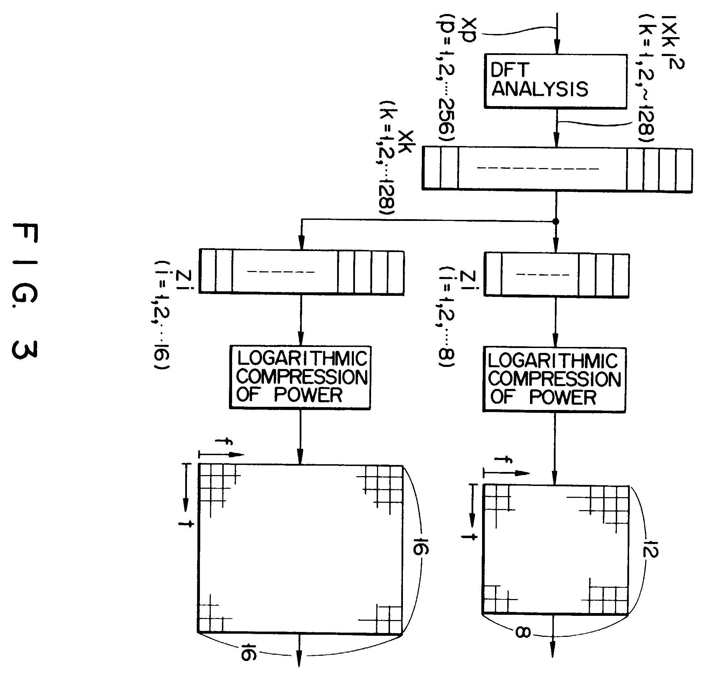

Both the first feature parameter and the second feature parameter can be obtained by frequency analysis known as "FFT (Fast Fourier Transform) analysis" as will be explained with reference to Fig. 3. Either analysis section of the speech analysis unit 2 performs, for example, DFT analysis on the input digital speech signal. More specifically, as is shown in Fig. 3, 265-point discrete Fourier transform is performed by sampling the input speech signal at frequency of 12KHz, thereby obtaining a frequency spectrum $X_k$ (DFT spectrum) having a 128-point resolution. The power $X_k^2$ of this spectrum $X_k$ is smoothed along the frequency axis, thereby determining outputs $Z_i$ equivalent to those of an 8-channel or 16-channel filter bank (($i = 1, 2, \dots 8$; or $i = 1, 2, \dots 16$).

In the first analysis section 4, to determine the outputs $Z_i$ equivalent to those of an 8-channel filter bank ($i = 1, 2, \dots 8$), the power of the spectrum $X_k$ is smoothed along the frequency axis, as follows:

$$Z1 = \sum_{k=5}^{10} |Xk|^2$$

$$Z2 = \sum_{k=9}^{15} |Xk|^2$$

$$Zi = \sum_{k=mi}^{ni} |Xk|^2$$

$$\vdots$$

$$Z8 = \sum_{k=70}^{110} |Xk|^2$$

4

Then, the logarithmic compression device 4d compresses the powers $Z_i$ ($i = 1, 2, ... 8$) thus determined, thereby obtaining a first feature parameter of the eighth order, which is represented as:

$$G_i = 10 \log Z_i \ (i = 1, 2, ... 8)$$

Also in the second analysis section 5, the power of the spectrum $X_k$ is smoothed, thereby determining the outputs $Z_i$ equivalent to those of a 16-channel filter bank ($i = 1, 2, ... 16$), and these outputs $Z_i$ are logarithmically compressed, thereby obtaining a second feature parameter of the 16 th order, which is represented as:

$G_i = 10 \log Z_i$ ($i = 1, 2, ... 16$)

As is understood from the above, the two speech feature parameters are obtained from the same frequency spectrum (i.e., the DFT spectrum). This method of providing feature parameters is very desirable since a relatively small amount of data is involved. Needless to say, two different FFT analyses can be performed on the digital speech signal, thereby to obtain the first and second feature parameters. Further, LPC analysis or cepstrum analysis can be employed to obtain the first and second feature parameters in the speech analysis unit 2.

As has been described, the speech analysis unit 2 extracts, from the input digital speech signal, a first speech feature parameter of a low order (i.e., a low frequency-resolution) and a second speech feature parameter of a high order (i.e., a high frequency-resolution) from the digital speech signal. The first feature parameter will be used in the speech recognition unit 3 to correlate a continuous speech pattern having flexible segment boundaries, whereas the second feature parameter will be used therein to correlate short segment patterns each having fixed boundaries.

The data which must be processed in the speech analysis unit 2 to obtain the first and second feature parameters is far less than the data which needs to be processed in the speech recognition unit 3 to achieve speech pattern correlation. Hence, the data processed in the analysis unit 2 does not greatly influence the total amount of the data which is processed in the entire speech recognition system.

The speech recognition unit 3 comprises a first recognition section and a second recognition section. The first recognition section uses the first feature parameters, thereby to correlate a continuous speech pattern (a pattern having flexible segment boundaries) with the reference speech patterns stored in the speech recognition dictionary 6. The second recognition section uses the second feature parameters, thereby to detect the start points of the segments forming the input speech, thus distinguishing the speech segments, to obtain the feature vector of each segment, and to correlate the pattern of the segment with the reference patterns stored in the dictionary 6.

The first recognition section comprises a continuous pattern matching section 7. The section 7 correlates a continuous speech pattern with the reference patterns stored in the dictionary 6 by means of word spotting. More precisely, a series of first feature parameters is input to the section 7 from the first analysis section 4. From this series of first feature parameters, the section 7 extracts time-series data of first feature vectors, each being of the eighth order on the frequency axis and the 12th order on the time axis. Then, the section 7 continuously correlates the time-series data with the reference patterns stored in the first dictionary section of the dictionary 6.

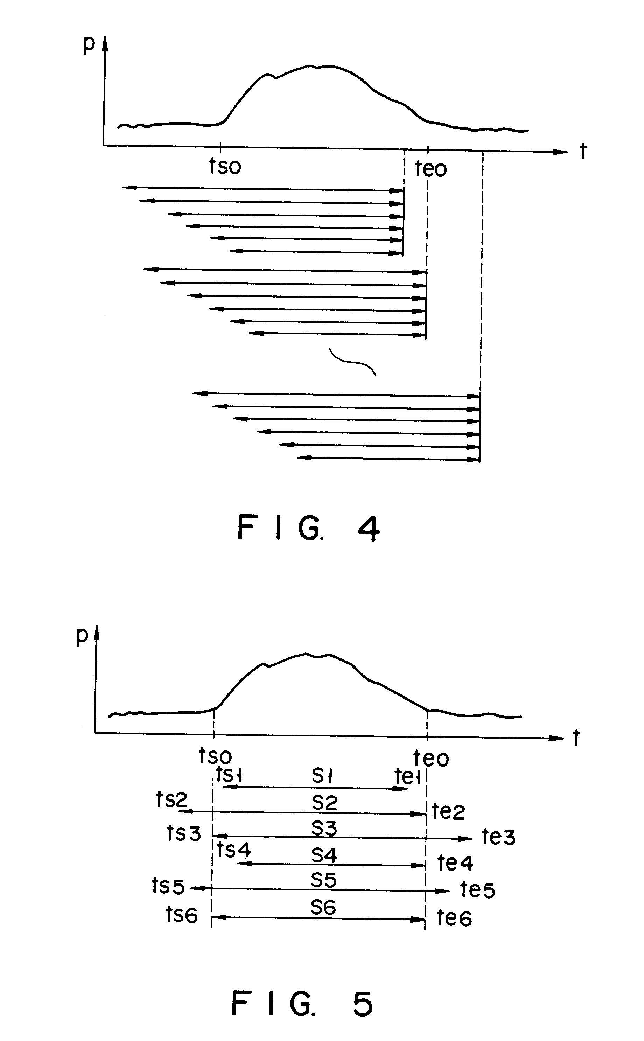

With reference to Fig. 4, it will be explained how the section 7 correlates the time-series data with the reference patterns stored in the first dictionary section. First, the sampling points at which the input speech have been sampled to obtain the first feature parameters are assumed as the end points of speech segments. Next, the start points of the speech segments are determined on the basis of the end points thus assumed. Then, the series of the speech segments, defined by the starts points and the end points, are sampled along the time axis, thereby obtaining the feature vectors of different orders for the speech segments, respectively. Each of these vectors extends from the end point of the corresponding speech segment. These feature vectors of the speech segments are continuously extracted while the end points of the speech segments are sifted along the time axis. As a result of this, the first feature vector of each speech segment is correlated with the reference patterns stored in the first section of the speech recognition dictionary 6. Thus, the similarity between the pattern of each speech segment and each reference pattern is determined by, for example, multiple similarity method.

Thereafter, the similarities between the pattern of each speech segment, on the one hand, and with the reference patterns stored in the first section of the dictionary 6 are compared with one another, as is illustrated in Fig. 5. The reference pattern, which is more ;imilar to that of the speech segment than any other reference pattern, is output as result of recognition to the recognition-result processing unit 11.

The word spotting performed by the continuous pattern matching section 7 is free of the above-mentioned problem that may result from errors in detecting speech segments, and therefore helps to enhance the speech-recognition accuracy of the system. In the word spotting method, however, it is necessary to extract the feature vectors of speech segments continuously extracted from the input speech and determine the similarity between the first feature vector of each segment, on the one hand, and the reference patterns stored in the first section of the dictionary 6. To achieve the extraction of the feature vectors and the determination of similarity, a great amount of data must be processed. In order to reduce the amount of data to process, thereby to render the speech recognition practical, the order of the feature vectors should be lowered. If the order of the feature vectors is lowered, however, the subtle features of the input speech can no longer be recognized, though the general feature of the speech be recognized correctly. Hence, no sufficiently accurate correlation of speech segments is possible.

To recognize the subtle features of the input speech, the second recognition section incorporated in the speech recognition unit 3 extracts high-order feature vectors representing the subtle features of the input speech, from the second feature parameters, and correlates the patterns of the speech segments with the reference patterns stored in the second section of the dictionary 6, on the basis of the high-order feature vectors.

As is shown in Fig. 1, the second recognition section incorporated in the speech recognition unit 3 comprises a start/end point detecting section 8, a feature vector extracting section 9, and a segment pattern matching section 10.

The start/end point detecting section 8 detects the start point and end point of each segment of the input speech, in accordance with the data obtained by the continuous pattern matching section 7 and representing the start points and end points of the speech segments. The start point and end point of each first feature vector that the section 7 has extracted from the input speech defines a recognition candidate segment of which general feature is known by virtue of the word spotting method. The section 8 performs the start/end point detection, either by determining the changes in the energy of the input speech or by performing continuous DP matching method. Hence, the start/end point detection can be achieved as a separate process.

The feature vector extracting section 9 samples the second feature parameters output by the second analysis section 5, in accordance with the data output by the section 8 and representing the start and end points of the speech segments. This sampling is performed along the frequency axis, thereby obtaining feature vectors of the speech segments, each vector being of the 16th order on the frequency axis and the 16th order on the time axis as is illustrated in Fig. 3. The second feature vectors of the speech segments, thus obtained, are input to the segment pattern matching section 10. The section 10 correlates the pattern of each speech segment, which is defined by the second feature vector, with the reference patterns stored in the second section of the speech recognition dictionary 6.

The segment pattern matching section 10 performs the multiple similarity method, just as the continuous pattern matching section 7 does, thereby to achieve the speech pattern correlation. Nonetheless, the section 10 can perform the HMM matching method or the DP matching method. More specifically, the section 10 receives the speech segments extracted from the the time-series data consisting of the second feature parameters in accordance with the start and end points detected by the section 8, and then correlates the patterns of each speech segment with the reference patterns stored in the second section of the dictionary 6, in accordance with the second feature vectors having a high order and representing the subtle features of the input speech segments. The reference pattern, which is more similar to that of the speech segment, is used as recognition candidate.

In summary, the following operations are performed in the speech recognition unit 3. The first speech recognition section detects the start point $ts\alpha$ and end point $te\alpha$ of each input word $\alpha$ and determines the similarity $S\alpha1$ of the word $\alpha$, in accordance with the time-series data of low-order first feature vectors. The second speech recognition section extracts high-order feature vectors in accordance with the start point $ts\alpha$ and the end point $te\alpha$, both detected by the first speech recognition section. The second speech section then determines the similarity $S\alpha2$ of the input word $\alpha$ based on the second feature vectors. In other words, the speech recognition unit 3 not only correlates a continuous speech pattern (a pattern having flexible segment boundaries) with the reference patterns stored in the first section of the dictionary 6. But also does the unit 3 detect the start and end points of each speech segment and then correlates the pattern of the each speech segment with the reference patterns stored in the second section of the dictionary 6. The results of speech recognition performed in the unit 3 are supplied to the recognition-result processing unit 11.

As is illustrated in Fig. 1, the recognition-result processing unit 11 comprises a first processing section 12, a second processing section 13, and a third processing section 14. The section 12 processes the recognition candidates obtained by the continuous pattern matching section 7. The section 13 processes the recognition candidates obtained by the segment pattern matching section 10. The section 14 evaluates the recognition candidates processed by the sections 12 and 13, thereby to provide the final recognition results.

The final recognition results made by the third processing section 14 are supplied through the recognition result output unit 15 to a data-processing apparatus (not shown) or a display (not shown, either) which displays the recognized speech in written form.

It will now be explained how the third processing section 14 processes the recognition candidates output by the possessing sections 12 and 13.

Let us assume that the continuous pattern matching section 7 of the speech recognition unit 3 obtains three recognition categories C1, C2, and C3 having first three highest similarities. The names of these recognition categories C1, C2, and C3 are supplied to the first processing section 12, along with the similarities SC1, SC2, and SC3 (hereinafter referred to as "first similarities") of these categories. At the same time, the data items representing the start/end points of the first feature vectors which define the first similarities SC1, SC2, and SC3 are supplied to the second speech recognition section and will be used therein to extract second feature vectors.

The second speech recognition section processes the recognition categories C1, C2, and C3 in accordance with the second feature vectors, thereby obtaining similarities SC1′, SC2′ and SC3′ (hereinafter referred to as "second similarities") for the recognition categories C1, C2, and C3, respectively.

In the recognition-result processing unit 11, the third processing section 14 adds the first similarities SC1, SC2, and SC3 to the second similarities SC1′, SC2′, and SC3′, respectively. That is:

$$TSCi = SCi + SCi' \ (i = 1, 2, 3)$$

In other words, the section 14 combines the first and second similarities SCi and SCi′ of each recognition category Ci. Then, the section 14 compares the combined similarities TSC1, TSC2, and TSC3 with one another, and determines the highest combined similarity of these three. The highest combined similarity is supplied, as the final recognition result, through the recognition result output unit 15 to the data-processing apparatus or the display.

Instead of merely adding the first similarities obtained by the first speech recognition section to the second second similarities obtained by the second speech recognition section, a weighting coefficient w (0 < w < 1) can be applied to the first similarity SCi and the second similarity SCi', thereby to obtain a weighted mean thereof, which will be used as combined similarity STCi, as follows:

$$STCi = wSCi + (1 - w)SCi' \ (i = 1, 2, 3)$$

Preferably, w = approx. 0.2, so that the first and second similarities are appropriately weighted, which are the results of the pattern correlation using the second feature vector representing the subtle features of each input speech segment.

Further, the second similarities SC1′, SC2', and SC3' obtained for the recognition categories C1, C2, and C3 can be compared to determine whether or not the highest similarity and the second highest similarity differ very much. If the difference between these similarities is too great, the speech recognition can be effected based on the second similarities SC1′, SC2', and SC3' only, neglecting the first similarities SC1, SC2, and SC3. If the difference is relatively small, the speech recognition is performed based on both sets of similarities, i.e., the first similarities SC1, SC2, SC3 and the second similarities SC1′, SC2', and SC3'.

Alternatively, the similarities of either set can be converted to probability values, such as likelihood values, and the greatest probability value can be used as the final result of speech recognition. Another alternative is to analyze statistically the distribution of the first similarities SC1, SC2, and SC3 and that of the second similarities SC1′, SC2', and SC3', thereby to determine the highest similarity which will be used as the final result of speech recognition.

As has been described, the recognition-result processing unit 11 processes the similarities output by the speech recognition unit 3, thereby obtaining final recognition results.

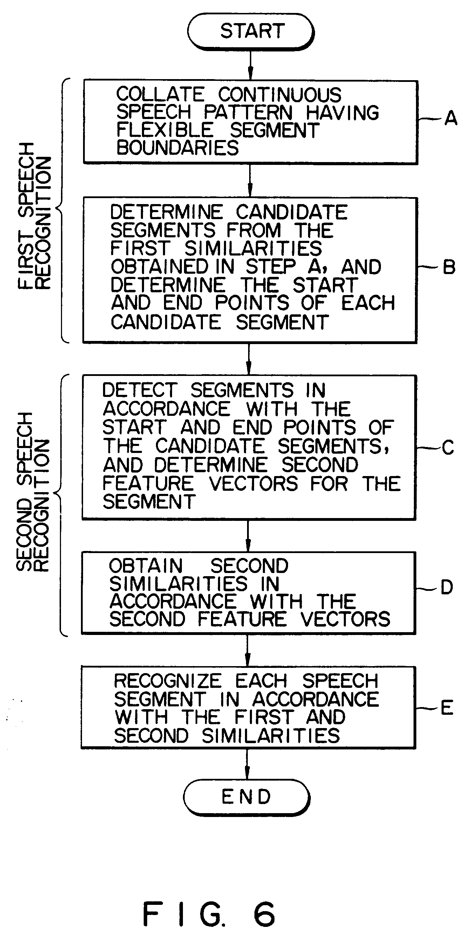

The operation of the speech recognition system shown in Fig. 1 will now be explained, with reference to the flow chart of Fig. 6.

First, in step A, low-order feature vectors are obtained from the time-series data representing the low-order first feature parameters obtained in the speech analysis unit 2, and then the pattern collation is performed on the continuous speech pattern which has flexible segment boundaries, in accordance with the low-order feature vectors. In step B, candidate segments (i.e., recognition candidates) are determined from the time-series data representing the first similarities obtained by the correlation of the continuous speech pattern, and also the start and end point of each candidate segment are determined. Thereafter, in step C, the segments of the input speech are detected in accordance with the start and end points of the candidate segments, which have been determined in Step B, and also determine the high-order second feature vectors of the speech segments thus detected. Next, in step D, the patterns of the speech segments are correlated in accordance with the second feature vectors, thereby determining second similarities. Finally, in step E, each segment of the input speech is recognized in accordance with the first and second similarities.

As has been described, the system recognizes each segment of the input speech in three steps. In the first step, the continuous pattern correlation is carried out on each speech segment in accordance with the low-order first feature vector obtained from the low-order first feature parameter, thereby determining the general feature of the speech segment. In the second step, the pattern of each segment defined by the start and end points represented by the first feature vector is collated in accordance with the high-order second feature vector obtained from the high-order second feature parameter, thereby determining the subtle feature of the speech segment. In the third step, the final recognition result is acquired from the general and subtle features of each speech segment, which have been determined in the first and second steps, respectively.

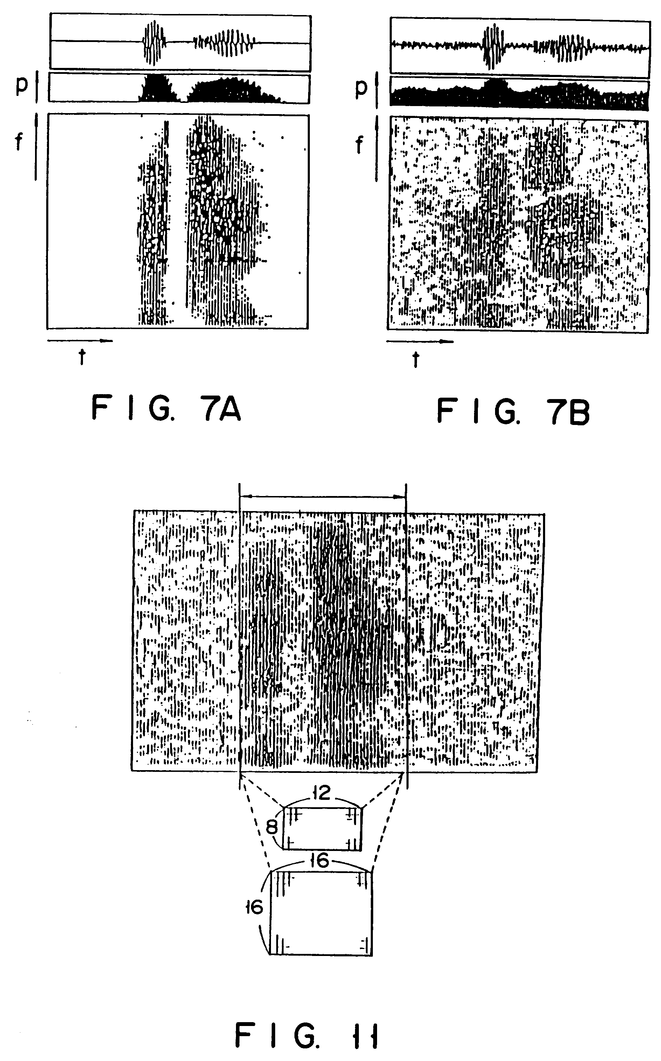

The recognition result obtained in the first step is not influenced by the noise, if any, contained in the input speech. The recognition result obtained in the second step represents the subtle feature of each segment. Each speech segment is recognized based on the two recognition results obtained in the first and second step. Hence, the final recognition result is very accurate. More specifically, even if the input speech pattern shown in Fig. 7A is, so to speak, buried in noise as is illustrated in Fig. 7B, it can be recognized with high accuracy.

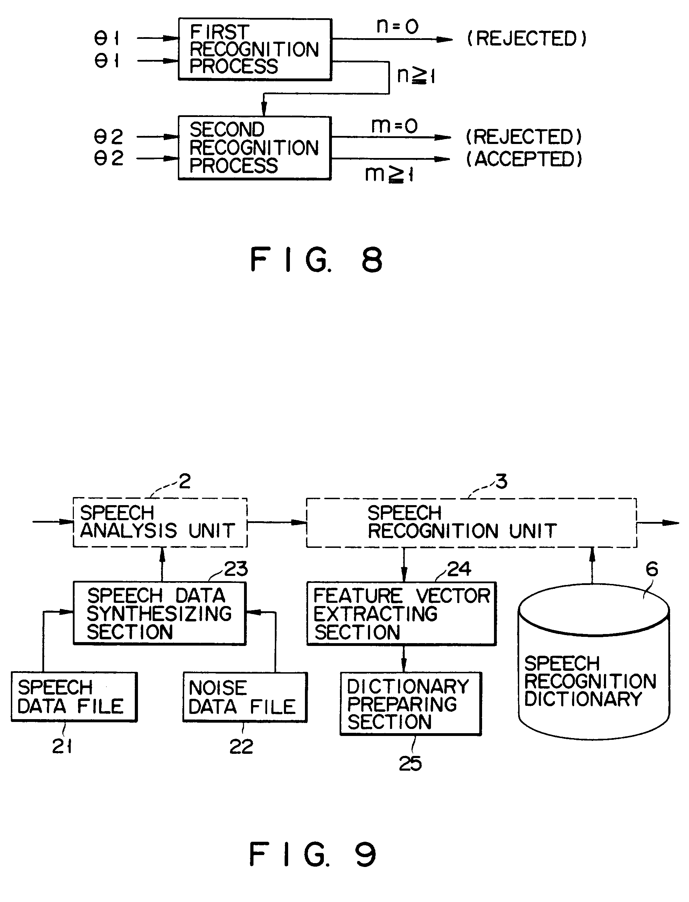

According to the invention, the first and second recognition steps can be performed in a specific way as will be explained with reference to Fig. 8. In the first step, of the recognition candidate obtained by the first speech recognition section, those whose similarities are greater than the threshold value θ1 and different from the maximum similarity Smax by Δθ1 or less are accepted, whereas the other recognition candidates are rejected. The patterns of these acceptable recognition candidates are correlated in the second step. In the second step, of the recognition candidates obtained by the second speech recognition section and corresponding to the acceptable recognition candidates, those whose similarities are greater than the threshold value θ2 and different from the maximum similarity Smax by Δθ2 or less are accepted, whereas the other recognition candidates are rejected. This method rejects semantically insignificant speech segments, and therefore can much help to impart a practical value to the speech recognition system.

As has been explained, the second feature vector for each speech segment is extracted from the second feature parameter in accordance with the start/end point data obtained by the first speech recognition section. However, the start/end point data does not always correctly represent the start and end points of the input speech segment. In order to recognize the speech segment accurately, it suffices to detect several points close to the start point and also several points close to the end point, and then to determine the feature vectors of the speech segments defined by these points, and to correlate the patterns of these segments by means of the segment pattern matching section 10. Alternatively, for the same purpose, it suffices to detect several candidate points for the start and end point of each speech segment, which serve to increase the similarity of the recognition candidate, to obtain the second feature vector of the segments defined by these candidate points, to determine second feature vectors for these segments, and to correlate the patterns of these segments based on the second feature vectors by means of the segment pattern matching section 10.

Feature vectors of only one type are used in each of the first and second speech-recognition step. Nonetheless, feature vectors of different types, i.e., vectors each being of a different order on the frequency axis and a different order on the time axis can be applied in either speech-recognition step. If this is the case, input speech can be recognized with higher accuracy though more data needs to be processed.

Moreover, the present invention can be modified in various ways, without departing from the scope of the invention as defined by the appended claims. For instance, the patterns of the speech segments can be correlated in any method other than the above-described one.

Although not shown in Fig. 1, the speech recognition system further comprises a speech pattern learning unit for modifying the reference patterns stored in the speech recognition dictionary 6. As is schematically shown in Fig. 9, the speech pattern learning unit comprises a speech data file 21, a noise data file 22, a speech data synthesizing section 23, a feature vector extracting section 24, and a dictionary preparing section 25.

The speech data file 21 stores speech data representing the patterns of various recognition categories which have been recorded in a noiseless environment. The noise data file 22 stores noise data representing the noises which has been made and recorded in various environments such as streets, stations, offices, and the like.

The speech synthesizing section 23 reads the speech data from the speech data file 21 and the noise data from the nose data file 22. Then, it superposes the noise data on the speech data, thereby modifying the speech patterns. The degree of modification is adjusted in accordance with the level of the noise data superposed on the speech data. The modified speech patterns are supplied from the speech synthesizing section 23 to the speech analysis unit 2. In the unit 2, the first feature parameters and the second feature parameters are obtained on the basis of these modified speech patterns.

In the speech recognition unit 3, the continuous pattern-matching section 7 processes the first feature parameters, thereby obtaining time-series data of first feature vectors, and performs continuous pattern matching, thereby obtaining time-series data of first similarities.

Since the recognition categories whose patterns are to be learned are known, it may be sufficient to correlate the patterns of these categories with the reference patterns stored in the dictionary 6. In order to distinguish, if necessary, similar recognition categories from one another, it is desirable that the patterns of these similar categories be correlated with the reference patterns stored in the dictionary 6. Further, when the similar categories are rather unclear and need to be identified, it suffices to correlate their patterns with the reference patterns stored in the dictionary 6 in the same manner as in the case of recognizing the input speech.

The feature vector extracting section 24 receives the time-series data of first similarities from the continuous pattern-matching section 7 of the speech recognition unit 3. Then, the section 24 processes the time-series data, thereby to detect any first similarity $S_{ij}$ which differs from the maximum similarity $maxS_{ij}$ by a predetermined value $\theta$ or less, and also detect the start point $t_s$ and end point $t_e$ of the first feature vector $X_{ij}$ corresponding to the first similarity $S_{ij}$. The points $t_s$ and $t_e$ of the first feature vector $X_{ij}$ and the similarity $S_{ij}$ will be used to extract a feature vector for the purpose of learning speech patterns.

Thereafter, the feature vector extracting section 24 examines the point $t_s$ and $t_e$ of the first feature vector $X_{ij}$. If these points are found to be genuine, the section 24 obtains a first feature parameter and a second feature parameter of each speech segment based on the points $t_s$ and $t_e$. Further, the section 24 determines a first feature vector and a second feature vector for the speech segment from the first and second feature parameters, as is illustrated in Fig. 11.

The dictionary preparing section 25 prepares new patterns for the speech segments based on the first and second feature vectors thus determined for every input speech segment. The data representing these new segment patterns is supplied to the speech recognition dictionary 6, thereby updating the reference patterns stored therein.

More specifically, the learning process on the dictionary 6 is accomplished in the following manner when the segment pattern matching section 10 performs the multiple similarity method. First, the covariance matrix of the reference patterns is updated in accordance with the feature vectors Xij extracted by the section 24. Next, the covariance matrix is subjected to KL transform, thereby determining an eigen value $\lambda$ and an eigen $\phi$, both specifics to the covariance matrix. Then eigen value $\lambda$ and the eigen vector $\phi$ are stored into the dictionary 6, thereby updating the contents thereof.

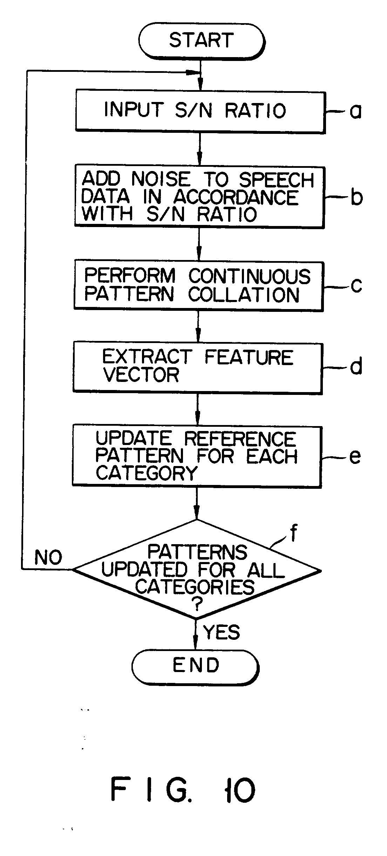

The learning process will be explained in greater detail, with reference to the flow chart illustrated in Fig. 10.

First, in step a, a signal-to-noise (S/N) ratio is input which is the ratio of the speech data to the noise data. In step b, the noise data is superposed on the speech data representing a first recognition category, to the degree determined by the S/N ratio, thereby forming new pattern of the first recognition category. The speech analysis unit 2 analyzes the new pattern, thereby obtaining first and second feature parameters for the first recognition category. In step c, the first speech recognition section of the unit 3 performs the word spotting, thus correlating the pattern of the first category with the reference patterns stored in the first section of the dictionary 6, in accordance with the time-series data of low-order feature vector which has been obtained from the low-order feature parameter. Hence, the first speech recognition section provides time-series data of similarity.

Thereafter, the feature vector extracting section 24 processes the time-series data of similarity, thereby to detect any first similarity $S_{ij}$ which differs from the maximum similarity $maxS_{ij}$ by a predetermined value $\vartheta$ or less, and also detect the start point ts and end point te of the first feature vector $X_{ij}$ corresponding to the first similarity $S_{ij}$. In most cases, not only one set of start and end points, but also more sets of start and end points may be detected for one feature vector, depending upon the value $\theta$.

In the method of extracting feature vectors, which has been invented also by the present inventors and is disclosed in Japanese Patent Application No. 2-57978 the feature vector of each recognition category is extracted from the maximum similarity Smax obtained for the recognition category by means of the continuous pattern matching (i.e., word spotting).

By contrast, in the present invention, a plurality of sets of start and end points are detected from the time-series data of similarities, and the start and end points of one set are selected which are most similar to the reference start and end points already determined for each recognition category. Hence, the start and end points of the recognition category can be detected accurately.

The sets of start and end points, which have been detected from the time-series data of similarities obtained by the continuous pattern matching, define the segments of the input speech. These speech segments are examined to determine whether they have lengths falling within a predetermined range. Of the speech segments, those having lengths falling within that range will be used as candidate segments. Further, these candidate segments, the one having the length most similar that of the reference segment already determined for the recognition category is selected.

It can be during the continuous pattern matching (i.e., the word spotting) that the speech segments are examined to see whether or not they have lengths falling within the predetermined range. In other words, similarities may be obtained for only those of the speech segments whose length fall within said range. If this is the case, it will be no longer necessary, at the time of extracting the feature vectors, to examine the speech segments defined by the start and end points of these sets to determine if they have lengths falling within a predetermined range.

After the examination of the speech segments, the candidate start and end points for each segment are examined to see whether or not they are located within a predetermined distance from the reference start and end points for the segment. Of the candidate points, those located outside the predetermined distance are rejected, and those located at or within the predetermined distance are accepted. Then, the candidate segments defined by the accepted start and end points are examined to determine whether they have lengths falling with the predetermined range. Only those speech segments having lengths falling within that range are accepted as candidate speech segments. Of these candidate segments, the one having the length most similar to that of the reference segment already determined for the recognition category is selected.

Next, in step d, the first and second feature vectors are extracted from the first and second feature parameters for the speech segment having the highest similarity, as is illustrated in Fig. 11. The first and second feature, thus extracted, are accurate and reliable since either is not influenced by noise.

Further, in step e, the reference pattern for each recognition category stored in the dictionary 6 is updated in accordance with the first and second feature vectors extracted in step d. Hence, the speech recognition dictionary 6 is modified for better performance of the speech recognition system.

In step f, it is determined whether or not the contents of the dictionary 6 have been updated for all recognition categories. If NO, the sequence of dictionary learning process, described above, is repeated many times, up until step f, it is determined whether or not the contents of the dictionary 6 have been updated for all recognition categories.

The learning process performed on the dictionary 6 renders the reference patterns immune to noise, and may be called "noise immunity learning." The speech pattern learning unit (Fig. 9) superposes noise data on speech data, thus forming data representing a new reference pattern of each speech segment. This data modifies the reference patterns stored in the dictionary 6. The reference patterns, thus modified, are used in the first speech recognition section to effect continuous pattern matching, and also in the the second speech recognition section to perform segment pattern matching. In other words, the data formed by the speech pattern learning unit renders the dictionary 6 more efficient and more reliable. Further, the feature vector of each speech segment, which is accurately extracted in accordance with the start and end points detected by means of the continuous pattern matching, modifies the corresponding reference pattern stored in the dictionary 6, thus making the dictionary 6 more efficient.

The speech recognition dictionary 6, thus updated, serves very much to increase the recognition rate of the speech recognition system.

The present invention is not limited to the embodiment described above. For example, speech segments can be phonemes or syllables, instead of words as in the above embodiment. Further, recognition categories can be phrases, composite words, or sentences, instead of words as in the above embodiment. Moreover, the order of the feature vectors used in the speech recognition process and the method of pattern matching need not be limited to those employed in the embodiment described above. The speech recognition system according to the invention is a hybrid system performing both continuous pattern matching and segment pattern matching, and can be modified in various ways within the scope of the present invention as defined by the appended claims.

## Claims

1. A speech recognition system comprising:

   speech analysis means (2) for analyzing input speech, to obtain time-series data of feature parameters of the input speech;
   means (6) for storing a first recognition dictionary containing reference patterns;
   first speech recognition means (7) designed to obtain first word feature vectors from the time-series data obtained by said speech analysis means in accordance with a word-spotting method, without fixing word boundaries, and to correlate the first word feature vectors with the reference patterns in the first recognition dictionary; and
   recognition-result processing means (11) for obtaining speech recognition results from the first word feature vectors;
   characterized by including:
   segmentation means (8) for detecting start and end points of each of the first word feature vectors;
   feature vector extracting means (9) for extracting second word feature vectors from the time-series signal in accordance with the detected start and end points; and
   second speech recognition means (10) designed to correlate the second word feature vectors with reference patterns of a second recognition dictionary, stored in the storing means (6);
   whereby the recognition-result processing means (11) obtains final speech recognition results from the first and second word feature vectors.

2. A system according to Claim 1, in which the first feature vectors are of an order lower than that of the second feature vectors.

3. A system according to Claim 1 or 2, in which the first speech recognition means (7) includes means for correlating the first feature vectors with the reference patterns stored in said first recognition dictionary by means of a word spotting method, to obtain the time-series data of first similarities.

4. A system according to Claim 1, 2 or 3, in which the first and second speech recognition means (7, 10) calculate, in the same way, the similarities between each of the feature vectors and the reference patterns, to correlate the feature vectors with the reference patterns.

5. A speech recognition system according to any preceding claim, comprising speech pattern learning means (21, 25) for updating the contents of said first and second recognition dictionaries.

6. A system according to Claim 5, in which the speech pattern learning means (21, 25) includes means (23) for processing speech data representing the input speech, and forming modified speech data, means (24) for detecting start and end points for the segments of the input speech, in accordance with the time-series data of similarities which have been obtained through word spotting method performed by said first speech recognition means, means (2) for analyzing the modified speech data, to obtain time-series data of feature parameters, and means for extracting the first and second feature parameters from the time-series data of feature parameters in accordance with the start and end points.

7. A system according to Claim 6, in which the speech pattern learning means (21, 25) includes means (23) for adding noise to the speech data, to modify the speech data.

8. A method of recognizing an input speech, comprising:

analyzing input speech to obtain time-series data of feature parameters of the input speech;
obtaining first word feature vectors from the time-series data obtained by said speech analysis means in accordance with a word-spotting method, without fixing word boundaries, and correlating the first word feature vectors with reference patterns stored in a first recognition dictionary to obtain first recognition results; and
obtaining speech recognition results from the first word feature vectors;
characterized by including the steps of:
detecting start and end points of each of the first word feature vectors;
extracting second word feature vectors from the time-series signal in accordance with the detected start and end points; and
correlating the extracted second feature candidates with reference patterns stored in a second recognition dictionary, to obtain second recognition results;
thereby obtaining final recognition results from the first and second recognition results.

9. A method according to Claim 8, in which the first feature vectors are of an order lower than that of the second feature vectors.

10. A method according to Claim 8 or 9, in which the second step includes a step of correlating the first feature vectors with the reference patterns stored in the first recognition dictionary by means of a word spotting method, to obtain the time-series data of first similarities.

11. A method according to Claim 8, 9 or 10, in which the similarities between each of the feature vectors and the reference patterns are calculated in the same way, to correlate the feature vectors with the reference patterns.

12. A method according to Claim 8, 9, 10 or 11, further comprising updating the contents of said first and second recognition dictionaries.

13. A method according to Claim 12, in which the updating includes processing speech data representing the input speech, to form modified speech data, detecting start and end points for the segments of the input speech, in accordance with the time-series data of similarities which have been obtained through the word spotting method performed by said first speech recognition means, analyzing the modified speech data to obtain time-series data of feature parameters, and extracting the first and second feature parameters from the time-series data of feature parameters in accordance with the start and end points.

14. A method according to Claim 13, in which the updating includes adding noise to the speech data, to modify the speech data.

**Patentansprüche**

1. Spracherkennungssystem mit:

einer Sprachanalyseeinrichtung (2) zum Analysieren einer Eingabesprache, um zeitserielle Daten für Merkmalsparameter der Eingabesprache zu erhalten,
einer Einrichtung (6) zum Speichern eines Bezugsmuster enthaltenden ersten Erkennungswörterbuches,
einer ersten Spracherkennungseinrichtung (7), die ausgelegt ist zum Gewinnen erster Wortmerkmalsvektoren aus den durch die Sprachanalyseeinrichtung erhaltenen zeitseriellen Daten gemäß einer Wortfleckmethode, ohne Wortgrenzen zu fixieren, und zum Korrelieren der ersten Wortmerkmalsvektoren mit den Bezugsmustern in dem ersten Erkennungswörterbuch, und
einer Erkennungsergebnis-Verarbeitungseinrichtung (11) zum Gewinnen von Spracherkennungsergebnissen aus den ersten Wortmerkmalsvektoren,
gekennzeichnet durch:
eine Segmentiereinrichtung (8) zum Erfassen von Start- und Endpunkten von jedem der ersten Wortmerkmalsvektoren,
eine Merkmalsvektor-Aussiebeinrichtung (9) zum Aussieben von zweiten Wortmerkmalsvektoren aus dem zeitseriellen Signal gemäß den erfaßten Start- und Endpunkten, und
eine zweite Spracherkennungseinrichtung (10), die ausgelegt ist, um die zweiten Wortmerkmalsvektoren bezüglich Mustern eines in der Speichereinrichtung (6) gespeicherten zweiten Erkennungswörterbuches zu korrelieren,

wodurch die Erkennungsergebnis-Verarbeitungseinrichtung (11) Endspracherkennungsergebnisse von den ersten und zweiten Wortmerkmalsvektoren erhält.

2. System nach Anspruch 1, bei dem die ersten Merkmalsvektoren von einer Ordnung niedriger als diejenige der zweiten Merkmalsvektoren sind.

3. System nach Anspruch 1 oder 2, bei dem die erste Spracherkennungseinrichtung (7) eine Einrichtung zum Korrelieren der ersten Merkmalsvektoren mit den in dem ersten Erkennungswörterbuch gespeicherten Bezugsmustern mittels einer Wortfleckmethode umfaßt, um die zeitseriellen Daten von ersten Ähnlichkeiten zu erhalten.

4. System nach Anspruch 1, 2 oder 3, bei dem die ersten und zweiten Spracherkennungseinrichtungen (7, 10) in der gleichen Weise die Ähnlichkeiten zwischen jedem der Merkmalsvektoren und den Bezugsmustern berechnen, um die Merkmalsvektoren mit den Bezugsmustern zu korrelieren.

5. Spracherkennungssystem nach einem vorangehenden Anspruch, mit einer Sprachmuster-Lerneinrichtung (21, 25) zum Fortschreiben der Inhalte der ersten und zweiten Erkennungswörterbücher.

6. System nach Anspruch 5, bei dem die Sprachmuster-lerneinrichtung (21, 25) eine Einrichtung (23) zum Verarbeiten von Sprachdaten, die die Eingabesprache darstellen, und zum Bilden modifizierter Sprachdaten, eine Einrichtung (24) zum Erfassen von Start- und Endpunkten für die Segmente der Eingabesprache gemäß den zeitseriellen Daten der Ähnlichkeiten, die durch die Wortfleckmethode erhalten sind, die durch die erste Spracherkennungseinrichtung durchgeführt ist, eine Einrichtung (2) zum Analysieren der modifizierten Sprachdaten, um zeitserielle Daten der Merkmalsparameter zu gewinnen, und eine Einrichtung zum Aussieben der ersten und zweiten Merkmalsparameter aus den zeitseriellen Daten der Merkmalsparameter gemäß den Start- und Endpunkten aufweist.

7. System nach Anspruch 6, bei dem die Sprachmuster-Lerneinrichtung (21, 25) eine Einrichtung (23) zum Addieren eines Rauschens zu den Sprachdaten umfaßt, um die Sprachdaten zu modifizieren.

8. Verfahren zum Erkennen einer Eingabesprache, mit:

Analysieren der Eingabesprache, um zeitserielle Daten der Merkmalsparameter in der Eingabesprache zu erhalten,

Gewinnen erster Wortmerkmalsvektoren aus den durch die Sprachanalyseeinrichtung erhaltenen zeitseriellen Daten gemäß einer Wortfleckmethode, ohne Wortgrenzen zu fixieren, und Korrelieren der ersten Wortmerkmalsvektoren mit in einem ersten Erkennungswörterbuch gespeicherten Bezugsmustern, um erste Erkennungsergebnisse zu erhalten, und

Gewinnen von Spracherkennungsergebnissen aus den ersten Wortmerkmalsvektoren,

gekennzeichnet durch die folgenden Schritte:

Erfassen von Start- und Endpunkten von jedem der ersten Wortmerkmalsvektoren,

Aussieben von zweiten Wortmerkmalsvektoren aus dem zeitseriellen Signal gemäß den erfaßten Start- und Endpunkten, und

Korrelieren der ausgesiebten zweiten Merkmalskandidaten mit Bezugsmustern, die in einem zweiten Erkennungswörterbuch gespeichert sind, um zweite Erkennungsergebnisse zu erhalten,

um so Enderkennungsergebnisse von den ersten und zweiten Erkennungsergebnissen zu gewinnen.

9. Verfahren nach Anspruch 8, bei dem die ersten Merkmalsvektoren von einer Ordnung niedriger als diejenige der zweiten Merkmalsvektoren sind.

10. Verfahren nach Anspruch 8 oder 9, bei dem der zweite Schritt einen Schritt des Korrelierens der ersten Merkmalsvektoren mit den in dem ersten Erkennungswörterbuch gespeicherten Bezugsmustern mittels einer Wortfleckmethode umfaßt, um die zeitseriellen Daten der ersten Ähnlichkeiten zu erhalten.

11. Verfahren nach Anspruch 8, 9 oder 10, bei dem die Ähnlichkeiten von jedem der Merkmalsvektoren und der Bezugsmuster in der gleichen Weise berechnet werden, um die Merkmalsvektoren mit den Bezugsmustern zu korrelieren.

12. Verfahren nach Anspruch 8, 9, 10 oder 11, weiterhin umfassend ein Fortschreiben der Inhalte der ersten und zweiten Erkennungswörterbücher.

13. Verfahren nach Anspruch 12, bei dem das Fortschreiben umfaßt: Verarbeiten von Sprachdaten, die die Eingabesprache darstellen, um modifizierte Sprachdaten zu bilden, Erfassen von Start- und Endpunkten für die Segmente der Eingabesprache gemäß den zeitseriellen Daten der Ähnlichkeiten, die durch die Wortfleckmethode erhalten wurden, die durch die erste Spracherkennungseinrichtung durchgeführt ist, Analysieren der modifizierten Sprachdaten, um zeitserielle Daten von Merkmalsparametern zu erhalten, und Aussieben der ersten und zweiten Merkmalsparameter aus den zeitseriellen Daten der Merkmalsparameter gemäß den Start- und Endpunkten.

14. Verfahren nach Anspruch 13, bei dem das Fortschreiben ein Addieren von Rauschen zu den Sprachdaten umfaßt, um die Sprachdaten zu modifizieren.

**Revendications**

1. Un système de reconnaissance de parole comprenant :

    des moyens d'analyse de parole (2) pour analyser la parole d'entrée, de façon à obtenir des données en série dans le temps qui consistent en paramètres de caractéristiques de la parole d'entrée;
    des moyens (6) pour enregistrer un premier dictionnaire de reconnaissance contenant des configurations de référence;
    des premiers moyens de reconnaissance de parole (7) conçus pour obtenir des premiers vecteurs de caractéristiques de mots à partir des données en série dans le temps qui sont obtenues par les moyens d'analyse de parole, conformément à un procédé de localisation de mots, sans fixer des frontières de mots, et pour corréler les premiers vecteurs de caractéristiques de mots avec les configurations de référence dans le premier dictionnaire de reconnaissance; et
    des moyens de traitement de résultats de reconnaissance (11) pour obtenir des résultats de reconnaissance de parole à partir des premiers vecteurs de caractéristiques de mots;
    caractérisé en ce qu'il comprend :
    des moyens de segmentation (8) pour détecter des points initiaux et finals de chacun des premiers vecteurs de caractéristiques de mots;
    des moyens d'extraction de vecteur de caractéristiques (9) pour extraire des seconds vecteurs de caractéristiques de mots à partir du signal en série dans le temps, conformément aux points initiaux et finals détectés; et
    des seconds moyens de reconnaissance de parole (10) conçus pour corréler les seconds vecteurs de caractéristiques de mots avec des configurations de référence d'un second dictionnaire de reconnaissance, enregistré dans les moyens d'enregistrement (6);
    grâce à quoi les moyens de traitement de résultats de reconnaissance (11) obtiennent des résultats de reconnaissance de parole finals à partir des premier et second vecteurs de caractéristiques de mots.

2. Un système selon la revendication 1, dans lequel les premiers vecteurs de caractéristiques ont un ordre inférieur à celui des seconds vecteurs de caractéristiques.

3. Un système selon la revendication 1 ou 2, dans lequel les premiers moyens de reconnaissance de mots (7) comprennent des moyens pour corréler les premiers vecteurs de caractéristiques avec les configurations de référence qui sont enregistrées dans le premier dictionnaire de reconnaissance, au moyen d'un procédé de localisation de mots, pour obtenir les données en série dans le temps qui correspondent à des premières similitudes.

4. Un système selon la revendication 1, 2 ou 3, dans lequel les premiers et seconds moyens de reconnaissance de parole (7, 10) calculent, de la même manière, les similitudes entre chacun des vecteurs de caractéristiques et les configurations de référence, pour corréler les vecteurs de caractéristiques avec les configurations de référence.

5. Un système de reconnaissance de parole selon l'une quelconque des revendications précédentes, comprenant des moyens d'apprentissage de configurations de parole (21, 25) pour actualiser le contenu des premier et second dictionnaires de reconnaissance.

6. Un système selon la revendication 5, dans lequel les moyens d'apprentissage de configurations de parole (21, 25) comprennent des moyens (23) pour traiter des données de parole représentant la parole d'entrée, et pour former des données de parole modifiées, des moyens (24) pour détecter des points initiaux et finals pour les segments de la parole d'entrée, conformément aux données de similitudes, en série dans le temps, qui ont été obtenues par le procédé de localisation de mots exécuté par les premiers moyens de reconnaissance de parole, des moyens (2) pour analyser les données de parole modifiées, de façon à obtenir des données de paramètres de caractéristiques, en série dans le temps, et des moyens pour extraire les premiers et seconds paramètres de caractéristiques à partir des données de paramètres de caractéristiques en série dans le temps, conformément aux points initiaux et finals.

7. Un système selon la revendication 6, dans lequel les moyens d'apprentissage de configurations de parole (21, 25) comprennent des moyens (23) pour ajouter du bruit aux données de parole, afin de modifier les données de parole.

8. Un procédé de reconnaissance de parole d'entrée, comprenant :

   l'analyse de la parole d'entrée pour obtenir des données en série dans le temps correspondant à des paramètres de caractéristiques de la parole d'entrée;
   l'obtention de premiers vecteurs de caractéristiques de mots à partir des données en série dans le temps qui sont obtenues par les moyens d'analyse de parole, conformément à un procédé de localisation de mots, sans fixer des frontières de mots, et la corrélation des premiers vecteurs de caractéristiques de mots avec des configurations de référence qui sont enregistrées dans un premier dictionnaire de reconnaissance, pour obtenir des premiers résultats de reconnaissance; et
   l'obtention de résultats de reconnaissance de parole à partir des premiers vecteurs de caractéristiques de mots; caractérisé en ce qu'il comprend les étapes suivantes :
   la détection des points initiaux et finals de chacun des premiers vecteurs de caractéristiques de mots;
   l'extraction de seconds vecteurs de caractéristiques de mots à partir du signal en série dans le temps, conformément aux points initiaux et finals détectés; et
   la corrélation des seconds vecteurs de caractéristiques extraits avec des configurations de référence qui sont enregistrées dans un second dictionnaire de reconnaissance, pour obtenir des seconds résultats de reconnaissance;
   pour obtenir ainsi des résultats de reconnaissance finals à partir des premiers et seconds résultats de reconnaissance.

9. Un procédé selon la revendication 8, dans lequel les premiers vecteurs de caractéristiques ont un ordre inférieur à celui des seconds vecteurs de caractéristiques.

10. Un procédé selon la revendication 8 ou 9, dans lequel la seconde étape comprend une étape de corrélation des premiers vecteurs de caractéristiques avec les configurations de référence qui sont enregistrées dans le premier dictionnaire de reconnaissance, au moyen d'un procédé de localisation de mots, pour obtenir les données de premières similitudes, en série dans le temps.

11. Un procédé selon la revendication 8, 9 ou 10, dans lequel les similitudes entre chacun des vecteurs de caractéristiques et les configurations de référence sont calculées de la même manière, pour corréler les vecteurs de caractéristiques avec les configurations de référence.

12. Un procédé selon la revendication 8, 9, 10 ou 11, comprenant en outre l'actualisation du contenu des premiers et seconds dictionnaires de reconnaissance.

13. Un procédé selon la revendication 12, dans lequel l'actualisation comprend le traitement de données de parole représentant la parole d'entrée, pour former des données de parole modifiées, la détection des points initiaux et finals pour les segments de la parole d'entrée, conformément aux données de similitudes, en série dans le temps, qui ont été obtenues par le procédé de localisation de mots exécuté par les premiers moyens de reconnaissance de parole, l'analyse des données de parole modifiées pour obtenir des données de paramètres de caractéristiques, en série dans le temps, et l'extraction des premiers et seconds paramètres de caractéristiques à partir des données de paramètres de caractéristiques en série dans le temps, conformément aux points initiaux et finals.

14. Un procédé selon la revendication 13, dans lequel l'actualisation comprend l'ajout de bruit aux données de parole, pour modifier les données de parole.

F I G. 1

EP 0 430 615 B1

F I G. 2

EP 0 430 615 B1

F I G. 3

F I G. 4

F I G. 5

EP 0 430 615 B1

START

COLLATE CONTINUOUS SPEECH PATTERN HAVING FLEXIBLE SEGMENT BOUNDARIES — A

DETERMINE CANDIDATE SEGMENTS FROM THE FIRST SIMILARITIES OBTAINED IN STEP A, AND DETERMINE THE START AND END POINTS OF EACH CANDIDATE SEGMENT — B

FIRST SPEECH RECOGNITION

DETECT SEGMENTS IN ACCORDANCE WITH THE START AND END POINTS OF THE CANDIDATE SEGMENTS, AND DETERMINE SECOND FEATURE VECTORS FOR THE SEGMENT — C

OBTAIN SECOND SIMILARITIES IN ACCORDANCE WITH THE SECOND FEATURE VECTORS — D

SECOND SPEECH RECOGNITION

RECOGNIZE EACH SPEECH SEGMENT IN ACCORDANCE WITH THE FIRST AND SECOND SIMILARITIES — E

END

F I G. 6

19

p

f

## F I G. 7A

p

f

## F I G. 7B

## F I G. 11

FIRST RECOGNITION PROCESS

$\theta 1 \rightarrow$
$\theta 1 \rightarrow$

$n=0 \rightarrow$ (REJECTED)

$n \geq 1$

SECOND RECOGNITION PROCESS

$\theta 2 \rightarrow$
$\theta 2 \rightarrow$

$m=0 \rightarrow$ (REJECTED)
$m \geq 1 \rightarrow$ (ACCEPTED)

FIG. 8

2

SPEECH ANALYSIS UNIT

3

SPEECH RECOGNITION UNIT

23

SPEECH DATA SYNTHESIZING SECTION

24

FEATURE VECTOR EXTRACTING SECTION

6

SPEECH RECOGNITION DICTIONARY

SPEECH DATA FILE

21

NOISE DATA FILE

22

DICTIONARY PREPARING SECTION

25

FIG. 9

START

INPUT S/N RATIO — a

ADD NOISE TO SPEECH DATA IN ACCORDANCE WITH S/N RATIO — b

PERFORM CONTINUOUS PATTERN COLLATION — c

EXTRACT FEATURE VECTOR — d

UPDATE REFERENCE PATTERN FOR EACH CATEGORY — e

PATTERNS UPDATED FOR ALL CATEGORIES ? f

NO

YES

END

F I G. 10